# EUROPÄISCHE PATENTANMELDUNG

(11) **EP 3 367 185 A1**
(43) Veröffentlichungstag der Anmeldung: **29.08.2018**
(21) Anmeldenummer: 17158480.8
(22) Anmeldetag: 28.02.2017
(51) Int. Cl.: G05B 17/02

(54) **ANTRIEBSSYSTEM UND DESSEN BEURTEILUNG**

(71) Anmelder: Siemens Aktiengesellschaft, 80333 München (DE)
(72) Erfinder: BITTEROLF, David, 91056 Erlangen (DE); HAMM, Carsten, 91330 Eggolsheim, (DE); REICHEL, Theo, 91301 Forchheim (DE); BRETSCHNEIDER, Jochen, 73732 Esslingen (DE); KLAUS, Maximilian, 70839 Gerlingen (DE)

(57) **Zusammenfassung**

Bei einem Verfahren zur Beurteilung eines Antriebssystems (22) einer Werkzeugmaschine (21) oder einer Produktionsmaschine (21), wobei das Antriebssystem (22) eine Achse (23,24,25) aufweist, wird eine Auslastung des Antriebssystems (22) simuliert, wobei zur Simulation ein Antriebsprofil (20) verwendet wird, wobei Istwerte des Antriebssystems (22) simuliert werden, wobei die simulierten Istwerte (40) mit Vergleichswerten (41) in Bezug gesetzt werden. Das Antriebssystems (22) weist zumindest eine Achse (23,24,25) auf, wobei eine simulierte Auslastung des Antriebssystems (22) auf Basis eines Antriebsprofils (20) mit zumindest einem Vergleichswert (41) in Bezug gesetzt ist.

## Beschreibung

Die Erfindung betrifft ein Antriebssystem, insbesondere eines einer Werkzeugmaschine oder einer Produktionsmaschine, sowie ein Verfahren zur Beurteilung des Antriebssystems.

Der Betrieb einer Maschine unterliegt unterschiedlichen Rahmenbedingungen. Abhängig von diesen ergibt sich eine Auslastung der Maschine (z.B.: Drehmaschine, Fräsmaschine, Schleifmaschine, Bohrmaschine, Roboter etc.). Zur Bearbeitung eines Werkstücks mittels einer Werkzeugmaschine wird beispielsweise in einer Steuerung der Werkzeugmaschine ein Teileprogramm abgearbeitet, welches die Bewegungsabläufe eines Werkzeugs insbesondere punktgenau steuert. Das Teileprogramm umfasst dabei eine Vielzahl an Programmanweisungen, die unterschiedliche Aktionen der Steuerung bzw. der Werkzeugmaschine auslösen können. So gibt es beispielsweise Programmanweisungen, die direkt punktgenau eine Relativbewegung des Werkzeuges gegenüber dem Werkstück entlang einer vorbestimmten Bahn bewirken. Es gibt aber auch Programmanweisungen, die beispielsweise ein Unterprogramm, eine Nebenbewegung oder einen Zyklus aufrufen. Bei den zuletzt genannten werden in der Regel Parameter mit übergeben, durch die ein von der Werkzeugmaschine auszuführender Bearbeitungs- bzw. Bewegungsvorgang genauer spezifiziert wird. Beispielsweise werden der Steuerung durch das Teileprogramm beim Aufruf eines Taschen-Fräs-Zyklus Parameter zugeführt, welche die genaue Position und Größe der zu fräsenden Tasche bestimmen. Infolge der Programmanweisung "Tasche fräsen" in Verbindung mit den entsprechenden Parametern generiert die Steuerung selbsttätig die erforderlichen Bahndaten zur Bewegung des Werkzeugs relativ zum Werkstück. Ein anderes Beispiel für eine Programmanweisung ist der Aufruf einer Nebenbewegung, bei welcher der Steuerung lediglich der Anfangs- und der Endpunkt vorgegeben werden und für die die Steuerung entsprechende Bahndaten generiert, so dass das nicht mit dem Werkstück in Eingriff stehende Werkzeug kollisionsfrei von dem Anfangspunkt zu dem Endpunkt bewegt wird.

Bei einer Serienfertigung kann es wichtig sein, dass die Bewegungsabläufe, die von der Werkzeugmaschine ausgeführt werden, optimiert sind, da nicht optimierte Bewegungsabläufe einen erheblichen Zeit- und damit Kostenfaktor bei der Herstellung eines Werkstücks darstellen können. Zur Steigerung der Maschinen-Produktivität kann es sich daher lohnen - insbesondere in einer Serienfertigung - optimierte Bewegungsabläufe einzusetzen, bzw. die Auslastung der Hardware zu optimieren. Die Hardware betrifft beispielsweise das Antriebssystem. Achsen der Maschine können beispielsweise einen Teil der Hardware darstellen. Eine Achse weist beispielsweise einen Elektromotor und/oder einen Stromrichter auf. Die Berechnung optimierter Bewegungsabläufe erfolgt beispielsweise offline, d.h. außerhalb der Steuerung, da dies viel Rechenleistung benötigt und sehr zeitaufwändig ist. Direkt an der Maschine vorgenommene Änderungen des Teileprogramms können bei dieser Vorgehensweise nur schwer in die Optimierung der Bewegungsabläufe einfließen. Dies stellt ein Hindernis bei der Erzeugung zeitoptimierter Bewegungsabläufe dar und beschränkt in der Regel deren Einsatz auf die Großserienfertigung.

Motoren bzw. Antriebe können in einer vereinfachten Betrachtung durch Vorgabe eines Lastwechsels ausgelegt werden. Dabei wird ausgehend vom benötigten Drehmoment, von der benötigten Drehzahl, von der benötigten Geschwindigkeit und/der der benötigten Leistung die Auslegung des Motors, der Netzeinspeisung, der Leistungsmodule, der Regelungskomponenten und/oder der Lageerfassung vorgenommen.

Die Auslegung des Motors erfolgt beispielsweise mit Hinblick auf:

| | |
|---|---|
| • Mmax | Maximalmoment |
| • Imax | Maximalstrom (Grundlage: Bewegte Masse und gewünschte Beschleunigung amax) |
| • Mnenn | Nenndrehmoment |
| • Nmax | maximale Drehzahl |
| • I2t | thermische Überlastung des Motors/ Stellers) und/oder |
| • S1, S2, S3 | genormte Betriebsart |

Die herangezogenen Größen, vor allem Massen und Belastbarkeit, hängen sehr stark von der Konstruktion der Maschine ab und sind zum Zeitpunkt der Motorprojektierung vielleicht noch nicht bekannt. Die Auslegung stützt sich deswegen dann beispielsweise auf Annahmen vom Kunden und bezieht Sicherheitsfaktoren ein.

Zur Auslegung eines Antriebes, welcher beispielsweise eine Kombination aus Motor und Stromrichter aufweist, kann ein Auslegungsprogramm verwendet werden.

In manchen Fällen sind die Daten zur Motor-/Antriebsauslegung ungenau. Dies betrifft beispielsweise die Auslegung von Applikationen mit Linear- und Torquemotoren. Gerade aber mit diesen Direktantrieben soll gegebenenfalls an die Grenzen des Machbaren einer Applikation gegangen werden. In der Vergangenheit wurden Motoren bzw. Antriebe oft unnötig überdimensioniert (Angstzuschlag). Diese Situation kann durch eine bessere Auslegungsmethode verbessert werden. So können beispielsweise folgende Probleme überwunden werden:
- Die projektierte Beschleunigung einer Maschine wird für eine typische Kundenapplikation nicht erreicht, da der durch die Mechanik der Maschine begrenzte Ruck dies nicht erlaubt;
- Die Antriebe werden bei einem speziellen Kundenprogramm überhitzt;
- Eine Applikation wird nicht realisiert, da die Grobauslegung falsche Vorhersagen liefert und/oder
- bei Fragen, die Maschinenmechanik, Bewegungsführung und Antriebsauslegung ganzheitlich betreffen, können Kunden nur unzureichend unterstützt werden.

Eine Aufgabe der Erfindung ist es das Antriebssystem einer Maschine zu verbessern. Dabei kann die Auslegung des Motors und/oder einer nachgeschalteten Komponente präziser vorgenommen werden. So kann insbesondere eine Fehldimensionierung vermieden werden. Dies betrifft z.B. eine Überdimensionierung des Antriebs oder eine Unterdimensionierung des Antriebs.

Eine Lösung der Aufgabe ergibt sich nach einem Verfahren mit den Merkmalen nach Anspruch 1 und bei einem Antriebssystem mit den Merkmalen nach Anspruch 14. Weitere Ausgestaltungen ergeben sich beispielsweise nach den Ansprüchen 2 bis 13 bzw. 15 bis 17.

Bei einem Verfahren zur Beurteilung eines Antriebssystems einer Werkzeugmaschine oder einer Produktionsmaschine, wobei das Antriebssystem eine Achse aufweist, wird eine Auslastung des Antriebssystems simuliert. Zur Simulation wird ein Antriebsprofil verwendet, wobei Istwerte des Antriebssystems simuliert werden, wobei die simulierten Istwerte mit Vergleichswerten in Bezug gesetzt werden. Die Auslastung kann beispielsweise auf Basis eines Maximalmomentes Mmax, eines Maximalstroms Imax, eines Nennmomentes Mnenn, einer Maximaldrehzahl Nmax, einer thermischen Belastung I2t und/oder einer genormten Betriebsart wie S1, S2, S3, etc. ermittelt bzw. errechnet werden. So kann beispielsweise bei Betrieb und/oder Entwicklung einer Maschine die Auslastung beispielsweise der Maschinenachsen (Achsen) ermittelt und/oder optimiert werden. Dies betrifft insbesondere eine gegebene Applikation die optimierbar ist. Die Optimierung erfolgt insbesondere automatisch.

In einer Ausgestaltung des Verfahrens basiert das Antriebsprofil auf einem Teileprogramm. Das Teileprogramm ist beispielsweise aus der Programmierung von Werkzeugmaschinen bekannt.

In einer Ausgestaltung des Verfahrens wird zur Ermittlung der Auslastung bei einer Maschine mit einem Teileprogramm das

Teileprogramm abgefahren und es wird anhand von Messdaten überprüft, ob die Maschine die eingestellte Dynamik erbringt. Wenn die gewünschte Bearbeitungszeit nicht erreicht wird, dann wird die Dynamikanforderung schrittweise erhöht. Entweder man erreicht so das Ziel, oder man stößt an die Grenzen der Antriebe (z. B. Strom, Drehmoment, Leistung, Drehzahl). So kann beispielsweise eine begrenzende Komponente ermittelt werden und durch eine Komponente höherer Leistung ersetzt werden.

In einer Ausgestaltung des Verfahrens wird eine Virtuelle Maschine verwendet. Diese virtuelle Maschine weist beispielsweise Komponenten wie eine numerische Steuerung (NC), einen Antrieb und ein Maschinenmodell auf. Diese Komponenten lassen sich beispielsweise in drei aufeinanderfolgende Stufen simulieren:
- NC (mit idealen Antrieben und idealer Mechanik)
- NC + Antriebe (und idealer Mechanik)
- NC + Antriebe + FE-Modell (Finite Elemente Modell)

Diese Simulation kann im Rahmen einer virtuellen Produktion anhand eines mechatronischen Modells der Maschine für Kundenapplikationen ausgeführt werden. Hinzu kommt die Anwendung für die Motor/Antriebsauslegung. Für die Motorauslegung können detaillierte Aussagen vor allem in Kombination mit einem speziellen NC-Programm bzw. Bewegungsablauf des Kunden getroffen werden. Dabei werden die Eigenheiten der Algorithmen der Bewegungsführung in der NC und der geregelten Antriebe berücksichtigt. Dabei können Dynamik und Thermik betrachtet werden. Die konkrete Anwendung des Kunden wird durch die virtuelle Maschine bereits bei der Auslegung betrachtet. Die Belastung des Motors wird beispielsweise für die typische Anwendung und nicht alleine durch ein theoretisches Lastspiel berechnet. Durch Simulation mit einer virtuellen Maschine auch in unterschiedlichen Ausbaustufen wird die Auslegung des Motors/geregelten Antriebs hinsichtlich Statik, Dynamik und Thermik verfeinern. Eine virtuelle Produktion kann für die Motor-/Antriebsauslegung herangezogen werden.

In einer Ausgestaltung des Verfahrens ist ein für eine Produktion eines Gegenstandes typisches NC-Programm vorgegeben, aus welchem sich dann der Antrieb berechnen lässt, welcher benötigt wird, um die im NC-Programm beschriebene Bearbeitung auf einer neuen Maschine schneller zu machen. Zusätzlich kann noch die Qualität der Produktion bzw. Bearbeitung in Abhängigkeit von der Schnelligkeit berücksichtigt werden.

In einer Ausgestaltung des Verfahrens kann ein Beschleunigungsverlaufs für einen Produktionszyklus überprüft bzw. berechnet werden, um davon abgeleitet Aussagen zur Motorerwärmung in einer Achse wie z.B. der x-Achse zu treffen.

In einer Ausgestaltung des Verfahrens kann beispielsweise eine Bearbeitung von Brillengläsern mit Lineardirektantrieben betrachtet werden, um durch Simulation die erforderliche Beschleunigung bzw. den Ruck zu berechnen, um hieraus Rückschlüsse auf den Motor zu ziehen.

Beispielsweise kann auch bei einer Portalfräsmaschine bzw. bei einer Formfräsmaschine bei herkömmlicher Auslegung durch eine starke Ruckbegrenzungen in den Achsen (dies betrifft das Antriebsprofil, da sich in diesem die virtuelle Maschine wiederspiegeln lässt) die in der Motorprojektierung zugrunde gelegten max. Beschleunigungsangaben im Betrieb nicht erreicht werden (dies betrifft die Auslastung). Durch die Simulation der virtuellen Maschine können die max. erreichbaren Ruckwerte berechnet und in der Motorauslegung berücksichtigt werden. Durch die Einsparung von Motor- und Kühlleistung besteht ein großes Potenzial zur Einsparung von Kosten.

Beispielsweise kann es bei einer Bearbeitung auf einer Fräsmaschine mit Direktantrieben zur Überhitzung der Linearmotoren und in der Folge zum Ausfall der Antriebe in der x-Achse kommen. Mit Hilfe der Virtualisierung der Produktion bzw. der Produktionsmaschine (hier der Fräsmaschine) mit einer Virtualisierung der Direktantriebe, kann überprüft werden, ob durch das vorgegebene Bewegungsprofil des Teileprogramms, was durch ein Antriebsprofil repräsentiert sein kann, die Überhitzung erzeugt wurde. Hierzu kann einer oder eine Vielzahl folgender Schritte durchgeführt werden:
- Simulation des Teileprogramms mit den eingestellten Maschinendaten der NC-Steuerung;
- Berechnung der Sollverläufe für Position, Geschwindigkeit, Beschleunigung und/oder Kraft, und/oder
- auf Basis der Verläufe und/oder auf Basis eines oder mehrerer Motormodelle Berechnung des Temperaturverlaufs im Motor während der Abarbeitung des konkreten Teileprogramms.

In einer Ausgestaltung des Verfahrens werden simulierte Istwerte zur Änderung des Antriebsprofils verwendet. So kann das Antriebsprofil bzw. eine Produktion z.B. an eine vorhandene Hardware (z.B. Motor und/oder Stromrichter) angepasst werden. Es kann also eine Anpassung an die Möglichkeiten bzw. Leistungsgrenzen einer vorhandenen Hardware z.B. durch eine Reduktion einer Beschleunigung, vorgenommen werden, damit insbesondere eine Stromgrenze eines Antriebs nicht überschritten wird.

In einer Ausgestaltung des Verfahrens weist das Antriebssystem eine Vielzahl von Achsen auf. Das Antriebssystem betrifft beispielsweise eine numerisch gesteuerte Werkzeugmaschine (WZM) mit mehreren Achsen (z.B. mit drei, vier, fünf oder mehr Achsen). Durch die Simulation und die ggf. notwendigen Korrekturen, kann beispielsweise vermieden werden, dass eine zu schwach ausgelegte Achse die Performance eines gesamten Antriebssystems reduziert.

In einer Ausgestaltung des Verfahrens wird eine Auslastung zumindest einer Achse simuliert. Die Achse weist zumindest einen Motor oder zumindest eine Motor-Stromrichterkombination auf.

Durch die Digitalisierung, die Simulation, bzw. die Bereitstellung eines digitalen Zwillings kann eine Ermittlung und Optimierung der Antriebsauslastung für typische Anwendungen durchgeführt werden. Auch im Vorfeld einer Maschinenneuentwicklung kann so die Auslastung der Achsen für eine typische Anwendung simuliert werden. Anhand dessen können die Antriebsauslegung und die kinematischen Eigenschaften der Maschinen optimiert werden.

In einer Ausgestaltung des Verfahrens werden zur Simulation Maschinenparameter verwendet. Dies ist beispielsweise ein Übersetzungsverhältnis eines Getriebes und/oder eine Spindelsteigung, etc. Damit wird die Simulation verbessert.

In einer Ausgestaltung des Verfahrens werden zur Simulation mechanische Eigenschaften verwendet. Dies ist beispielsweise eine Reibung, ein Reibkoeffizient und/oder ein Temperaturkoeffizient, etc. Damit wird die Simulation verbessert.

In einer Ausgestaltung des Verfahrens werden zur Simulation ein Maschinenparameter und eine mechanische Eigenschaft verwendet. Auch dies verbessert die Simulation.

In einer Ausgestaltung des Verfahrens ist der Vergleichswert ein maximales Drehmoment, eine maximale Drehzahl, eine maximale Leistung, ein maximaler Strom und/oder eine Motorkennlinie.

In einer Ausgestaltung des Verfahrens wird ein Zyklus simuliert, wobei der Zyklus insbesondere thermisch bewertet wird. Der Zyklus ist beispielsweise ein Bearbeitungszyklus, ein Produktionszyklus, ein Lastzyklus etc. Durch eine Betrachtung eines Zyklus bzw. durch die Betrachtung von Zyklen kann eine Optimierung der Auslastung erzielt werden. Bei der Antriebsauslegung einer neuen Maschine wird beispielsweise ein Lastzyklus geschätzt, der die größte Belastung für einen oder mehrere Antriebe darstellen soll. Es ist nun möglich, die Auslegung anhand eines Teileprogramms und der maschinenspezifischen kinematischen Komponenten durchzuführen. Insbesondere bei einer 5-Achs- oder 6-Achs-Bearbeitung machen es die dabei auftretenden hochdynamischen Ausgleichsbewegungen schwierig, einen passenden Lastzyklus zu schätzen.

In einer Ausgestaltung des Verfahrens wird mittels der Simulation ermittelt, welche Achse und welche dynamische Größe während des Ablaufs des Teileprogramms für die Dynamik begrenzend wirken. Um die Begrenzung zu überwinden, wird die entsprechende Achse geändert.

In einer Ausgestaltung des Verfahrens kann untersucht werden, inwieweit eine ermittelte Begrenzung, oder eine Vielzahl davon, bestimmend für die Produktivität der Maschine ist. Durch Simulation kann festgestellt werden, wie sich eine Aufweitung der aktuell vorhandenen Begrenzungen positiv auf die Herstellungsqualität oder die Herstellungsdauer auswirkt. Wenn z.B. die Beschleunigungsgrenze in einer Achse nur um wenige Prozent erhöht werden könnte, so kann sich dies deutlich auf die Gesamtzeit der Bearbeitung auswirken. Dies ist dann maschinenbaulich und steuerungstechnisch umzusetzen. Ein Schritt hierfür ist beispielsweise das Aufzeigen der relevanten Limitierung und das Herstellen des Zusammenhangs. Dies wird durch die gezeigten Untersuchungen möglich. Es kann beispielsweise wie folgt vorgegangen werden:
- Ermittlung der Antriebsauslastung anhand einer Simulation
- Durchführen zumindest einer oder mehrerer Optimierungsmöglichkeiten bei:
   - der Antriebs- und Motorauslegung
   - den kinematischen Parameter
   - der Aufspannsituation
- Automatische Ermittlung der begrenzenden Achse, bzw. der begrenzenden Größen.

In einer Ausgestaltung des Verfahrens wird ein Drehmoment-Drehzahl-Diagramm für eine Werkzeugmaschine mit fünf oder mehr interpolierten Achsen erstellt. Hieraus kann ermittelt werden, welche Achse begrenzend wirkt.

In einer Ausgestaltung des Verfahrens wird ein Histogramm dynamischer Begrenzungen erstellt. Hieraus kann ermittelt werden, was die Dynamik begrenzt und es können Gegenmaßnahmen getroffen werden. So kann beispielsweise ein Motor höherer Leistung eingesetzt werden.

In einer Ausgestaltung des Verfahrens wird die Antriebsauslegung, die Motorauslegung, kinematische Parameter und/oder die Aufspannsituation optimiert. Dadurch ist die Effizienz steigerbar.

In einer Ausgestaltung des Verfahrens werden bei einer Vielzahl von Achsen die begrenzende Achse und/oder eine begrenzende Größe ermittelt. Die begrenzende Achse oder die begrenzende Größe kann danach analysiert werden und Teile der Maschine angepasst werden, damit die erkannte Begrenzung nicht mehr besteht.

In einer Ausgestaltung des Verfahrens, kann die Antriebsauslastung für ein bestimmtes Teileprogramm anhand der Parameter der Maschine automatisch durch eine Simulation bestimmt werden. Dabei wird insbesondere ausschließlich die Auslastung auf Grund der Führungsgrößen betrachtet (Störgrößen wie z.B. Bearbeitungskräfte und Reibung werden vernachlässigt). Dieses Ergebnis kann eine gute Annäherung der realen Gesamtauslastung darstellen.

In einer Ausgestaltung des Verfahrens wird ein Lastzyklus antriebsweise mit den Leistungsteil- und Motorkennlinien und - Grenzen verglichen. Dies betrifft beispielsweise:
- Maximales Drehmoment
- Maximale Drehzahl
- Maximale Leistung
- Maximaler Strom
- Maximale Kraft
- Maximale Geschwindigkeit
- S 1-Kennlinie.

Ein Antriebssystem, welches insbesondere eine Werkzeugmaschine oder eine Produktionsmaschine ist, weist zumindest eine Achse auf, wobei eine simulierte Auslastung des Antriebssystems auf Basis eines Antriebsprofils in Bezug gesetzt ist mit Vergleichswerten. So können beispielsweise Überlasten und/ oder Schwachstellen erkannt werden.

In einer Ausgestaltung des Antriebssystems kann dieses nach einem der beschriebenen Verfahren betrieben werden.

In einer Ausgestaltung des Antriebssystems weist dieses einen Simulationsrechner auf, welcher über das Internet mit der Werkzeugmaschine oder der Produktionsmaschine datentechnisch verbunden ist. So können Rechenarbeiten mit hohem Aufwand ausgelagert werden, um die Performance der Maschine nicht in unzulässiger Weise zu beeinflussen.

In einer Ausgestaltung des Antriebssystems weist dieses eine Vielzahl von Simulationsrechnern auf, wobei ein Rechner zur Verknüpfung von Simulationsdaten der Vielzahl von Simulationsrechnern vorgesehen ist. Durch diese Netzstruktur kann die Effizienz der Simulation verbessert werden.

Die Erfindung wird nachfolgend exemplarisch anhand von Ausführungsbeispielen erläutert. Dabei zeigen:
- FIG 1: einen Lastzyklus einer Z-Achse einer Maschine;
- FIG 2: einen Lastzyklus einer Z-Achse einer Maschine;
- FIG 3: einen Ruck der Achsen X, Y und Z einer Maschine;
- FIG 4: eine 3D-Darstellung einer gefahrenen Kontur;
- FIG 5: ein Antriebsprofil;
- FIG 6: eine Maschine und
- FIG 7: Simulationsschritte.

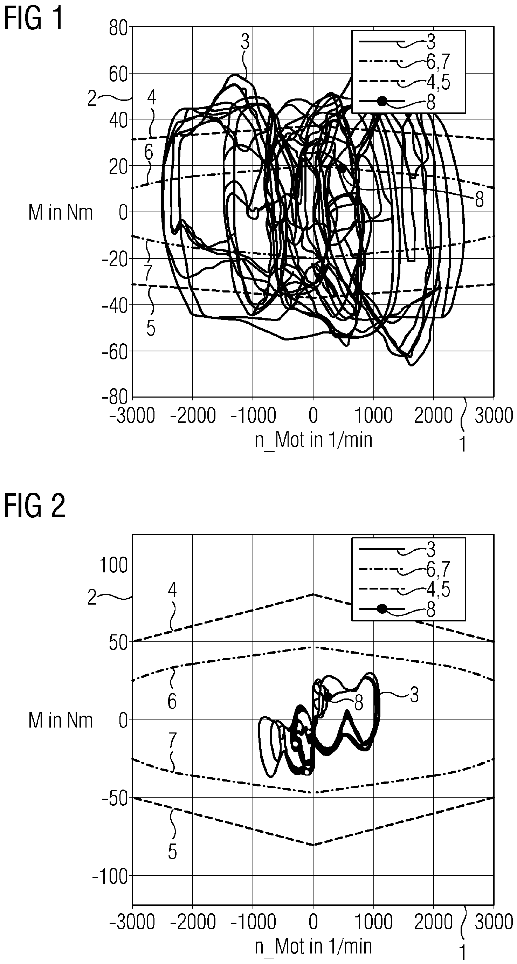

FIG 1 zeigt beispielhaft einen Lastzyklus 3 einer z-Achse bei der Bearbeitung eines Impellerrads dar, wobei der Lastzyklus ein Beschleunigungsmoment der z-Achse betrifft. Auf einer Abszisse ist die Drehzahl n_Mot eines Motors in 1/min aufgetragen. Auf einer Ordinate 2 ist ein Beschleunigungsmoment M in Nm aufgetragen. In keinem Punkt des Zyklus werden die Kennlinien und Grenzen des Motors und Leistungsteils verletzt. Die Grenzkennlinien für das Drehmoment, Leistung und Drehzahl liegen außerhalb des dargestellten Bereichs. Der Punkt 8 für ein effektives Moment stellt den durchschnittlichen Punkt des Zyklus dar und ist für die thermische Bewertung des Zyklus relevant. Dargestellt ist eine obere S1-100K-Linie 6 und eine untere S1-100K-Linie 7. Da der Punkt 8 direkt auf der oberen S1-100K-Kennlinie 6 liegt ist die Auslegung thermisch kritisch und die Verwendung eines anderen Motors sollte in Betracht gezogen werden. Dargestellt ist ferner eine obere S3-25%-Linie 4 und eine untere S3-25%-Linie 5, welche nicht verletzt werden.

FIG 2 zeigt im Fortgang zu FIG 1 eine weitere Kurve 3, welche den Lastzyklus einer zur X-Achse nach FIG 1 zugehörigen Y-Achse bei der Bearbeitung des Impellerrads zeigt. In keinem Punkt des Zyklus werden die Kennlinien und Grenzen des Motors und Leistungsteils verletzt. Die Grenzkennlinien für das Drehmoment, Leistung und Drehzahl liegen außerhalb des dargestellten Bereichs. Auch thermisch ist der Zyklus unkritisch, weil der Punkt 8 innerhalb des von den Kennlinien 4, 5, 6 und 7 vorgegebenen Bereichs liegt.

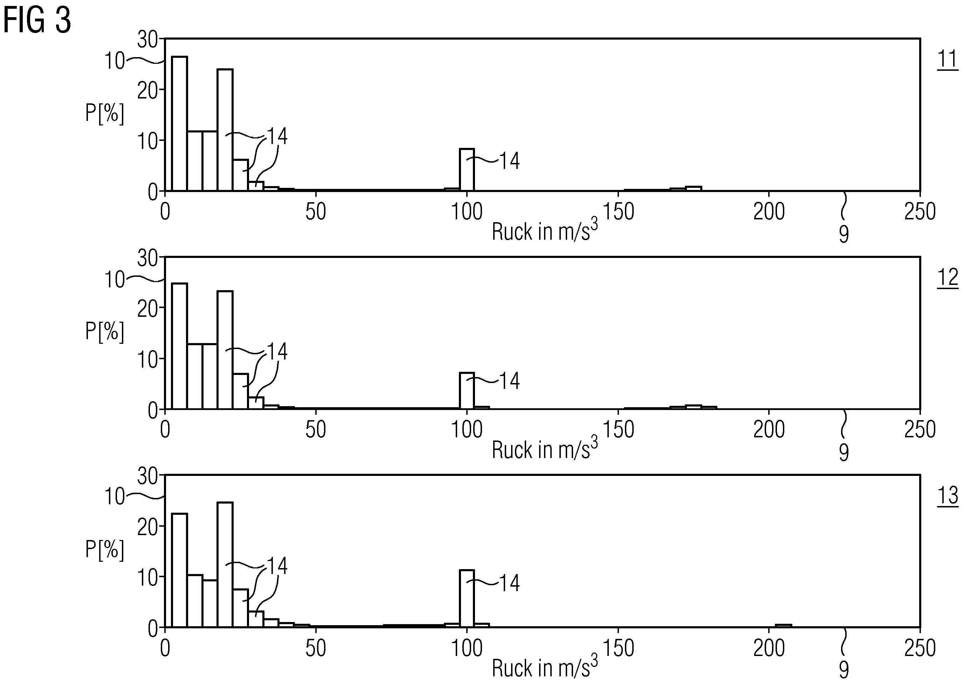

FIG 3 zeigt die prozentuale Häufigkeit des Auftretens eines Rucks bei drei Achsen: X 11, Y 12 und Z 13. Der Größe des Rucks ist auf der Abszisse 9 in m/s³ aufgetragen. Die Prozentuale Häufigkeit P des Auftretens des Rucks abhängig von dessen Stärke ist jeweils auf der Ordinate 10 aufgetragen. Auf Basis einer Simulation können Achsen und deren dynamische Größen (Ruck, Beschleunigung oder Geschwindigkeit) ermittelt werden. So kann anhand der Simulation ermittelt werden, welcher Achse und welche dynamische Größe (Ruck, Beschleunigung oder Geschwindigkeit) während des Ablaufs des Teileprogramms für die Dynamik begrenzend wirkt. Eine geeignete Darstellung kann z.B. als Histogramm erfolgen, wie es beispielhaft in FIG 3 dargestellt ist. Gemäß der Darstellung ist durch Säulen 14 gezeigt, dass in vielen Fällen der Ruck der Z-Achse begrenzend wirkt. Mit dieser Methode können beispielsweise auch sehr einfach verschiedene Aufspannsituationen verglichen werden. Bei der 5-Achs-Bearbeitung müssen die kartesischen Achsen zusätzlich die Ausgleichsbewegungen aufbringen. Eine unauffällige Bahndynamik kann aufgrund der Kinematik hochdynamische Ausgleichsbewegungen hervorrufen. Der Zusammenhang zwischen Begrenzungen und Bearbeitungszeit ist nicht trivial und schwer zu bewerten. Hier helfen die obig beschriebenen Darstellungen:
- Drehmoment-Drehzahl-Diagramm für z.B. fünf Achsen (nicht dargestellt)
- Histogramm der dynamischen Begrenzungen über z.B. fünf Achsen (nicht dargestellt).

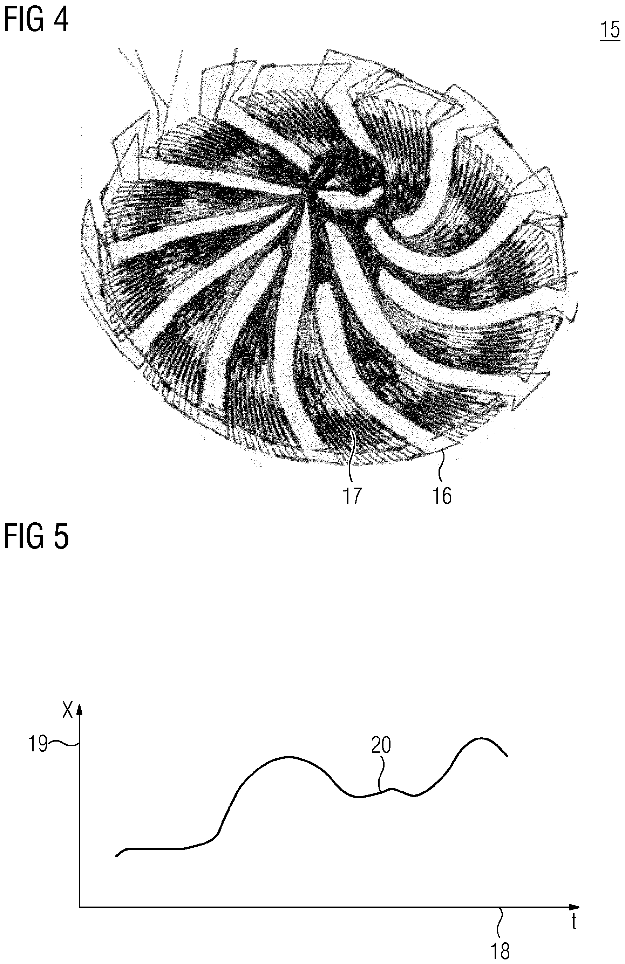

FIG 4 zeigt eine 3D-Darstellung 15 einer gefahrenen Kontur in einem Werkstückkoordinatensystem. So kann beispielsweise auch in einer dreidimensionalen Darstellung der gefahrenen Kontur im Werkstückkoordinatensystem farblich überlagert dargestellt werden, welche Achse an der gekennzeichneten Stelle begrenzend wirkt. Eine erste grüne Kurve 16 stellt beispielsweise die gefahrene Kontur im Werkstückkoordinatensystem dar, wobei in Rot Stellen bzw. Flächen 17 markiert sind, wo eine c-Achse begrenzend wirkt. Die c-Achse stellt dabei eine Rotationsachse einer Werkzeugmaschine dar.

FIG 5 zeigt ein Antriebsprofil 20. Auf einer Abszisse 18 ist eine Zeit t aufgetragen und auf einer Ordinate ist ein Weg x 19 aufgetragen.

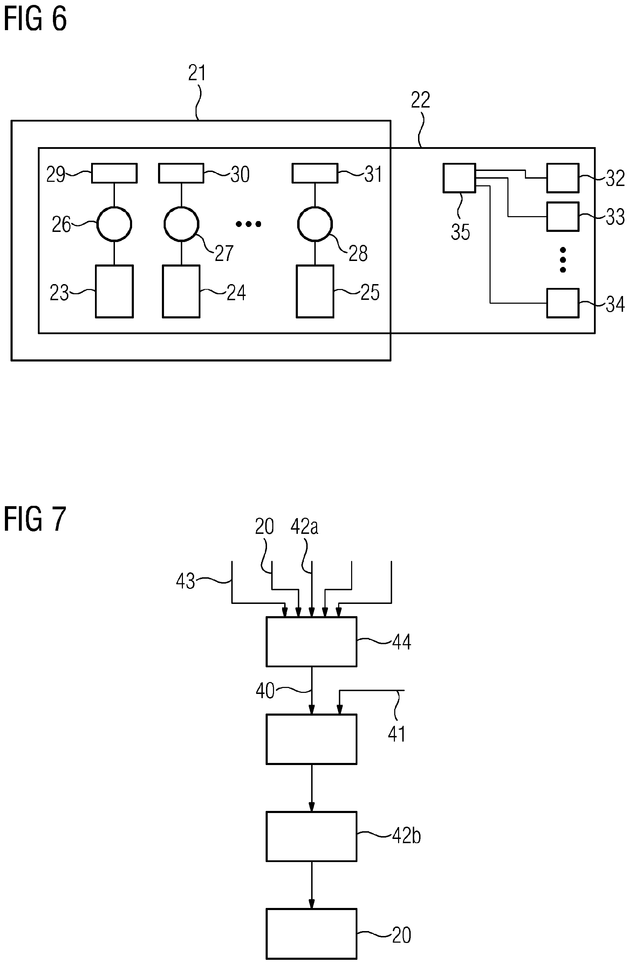

FIG 6 zeigt eine Maschine 21, welche zumindest einen Teil eines Antriebssystems 22 aufweist. Die Maschine 21 ist beispielsweise eine Werkzeugmaschine. Das Antriebssystem 22 weist eine erste Achse 23, eine zweite Achse 24 und eine dritte Achse 25 auf. Den Achsen 23, 24 und 25 ist jeweils ein Motor 26, 27 und 28 zum Antreiben zugeordnet. Den Motoren 26, 27 und 28 ist jeweils ein Stromrichter 29, 30 und 31 zugeordnet um den jeweiligen Motor 26, 27 und 28 mit elektrischer Energie zu speisen. Das Antriebssystem 22 weist eine Vielzahl von Simulationsrechnern 32, 33 und 34 auf, wobei ein Rechner 35 zur Verknüpfung von Simulationsdaten der Vielzahl von Simulationsrechnern 32, 33, 34 vorgesehen ist. Nach der Simulation und der automatischen Beurteilung, insbesondere der Erkennung von Überlasten, kann das Antriebssystem (z.B. durch leistungsstärkere Antriebe) und/oder auch ein Teileprogramm automatisch derart abgeändert werden, dass sich die Gesamtleistungsfähigkeit des Antriebssystems erhöht.

FIG 7 zeigt Simulationsschritte, wobei nach der Simulation 44 simulierte Istwerte 40 mit Vergleichswerten 41 in Bezug gesetzt werden. Zur Simulation werden beispielweise Daten aus einem Teileprogramm 42a, Maschinenparameter 43 und/oder ein Antriebsprofil 20a verwendet. Nach der Auswertung kann das Teileprogramm 42b automatisiert abgeändert werden, damit nach einer erneuten Simulation die Grenzwerte zumindest weniger überschritten werden. Durch die Abänderung des Teileprogramms 42b ergibt sich auch ein anderes Antriebsprofil 20b.

## Patentansprüche

1. Verfahren zur Beurteilung eines Antriebssystems (22) einer Werkzeugmaschine (21) oder einer Produktionsmaschine (21), wobei das Antriebssystem (22) eine Achse (23,24,25) aufweist, wobei eine Auslastung des Antriebssystems (22) simuliert wird, wobei zur Simulation ein Antriebsprofil (20) verwendet wird, wobei Istwerte des Antriebssystems (22) simuliert werden, wobei die simulierten Istwerte (40) mit Vergleichswerten (41) in Bezug gesetzt werden.

2. Verfahren nach Anspruch 1, wobei das Antriebsprofil (20) auf einem Teileprogramm (42) basiert.

3. Verfahren nach Anspruch 1 oder 2, wobei die simulierten Istwerte (40) zur Änderung des Antriebsprofils (20) verwendet werden.

4. Verfahren nach einem der Ansprüche 1 bis 3, wobei das Antriebssystem (22) eine Vielzahl von Achsen (23,24,25) auf.

5. Verfahren nach einem der Ansprüche 1 bis 4, wobei eine Auslastung zumindest einer Achse (23,24,25) simuliert wird.

6. Verfahren nach einem der Ansprüche 1 bis 5, wobei zur Simulation Maschinenparameter (43) verwendet werden.

7. Verfahren nach einem der Ansprüche 1 bis 6, wobei der Vergleichswert (41) ein maximales Drehmoment, eine maximale Drehzahl, eine maximale Leistung, ein maximaler Strom, eine maximale Geschwindigkeit, eine maximale Kraft und/oder eine Motorkennlinie ist.

8. Verfahren nach einem der Ansprüche 1 bis 7, wobei ein Zyklus simuliert wird, wobei der Zyklus insbesondere thermisch bewertet wird.

9. Verfahren nach einem der Ansprüche 2 bis 8, wobei mittels der Simulation ermittelt wird, welche Achse (23,24,25) und welche dynamische Größe während des Ablaufs des Teileprogramms (42) für die Dynamik begrenzend wirkt.

10. Verfahren nach einem der Ansprüche 1 bis 9, wobei ein Drehmoment-Drehzahl-Diagramm für eine Werkzeugmaschine mit fünf oder mehr interpolierten Achsen (23,24,25) erstellt wird.

11. Verfahren nach einem der Ansprüche 1 bis 10, wobei ein Histogramm dynamischer Begrenzungen erstellt wird.

12. Verfahren nach einem der Ansprüche 1 bis 11, wobei die Antriebsauslegung, die Motorauslegung, kinematische Parameter und/oder die Aufspannsituation optimiert werden.

13. Verfahren nach einem der Ansprüche 1 bis 12, wobei bei einer Vielzahl von Achsen (23,24,25) die begrenzende Achse und/oder eine begrenzende Größe ermittelt wird.

14. Antriebssystems (22), insbesondere einer Werkzeugmaschine oder einer Produktionsmaschine (21), wobei das Antriebssystem (22) zumindest eine Achse (23,24,25) aufweist, wobei eine simulierte Auslastung des Antriebssystems (22) auf Basis eines Antriebsprofils (20) mit zumindest einem Vergleichswert (41) in Bezug gesetzt ist.

15. Antriebssystem (22) nach Anspruch 14, wobei ein Verfahren nach einem der Ansprüche 1 bis 13 durchführbar ist.

16. Antriebssystem (22) nach Anspruch 14 oder 15, mit einem Simulationsrechner (22), welcher über das Internet mit der Werkzeugmaschine oder der Produktionsmaschine (21) datentechnisch verbunden ist.

17. Antriebssystem (22) nach Anspruch 16, mit einer Vielzahl von Simulationsrechnern (32,33,34), wobei ein Rechner (35) zur Verknüpfung von Simulationsdaten der Vielzahl von Simulationsrechnern (32,33,34) vorgesehen ist.
